# EUROPEAN PATENT SPECIFICATION

(11) **EP 4 043 749 B1**
(45) Date of publication and mention of the grant of the patent: **04.06.2025**
(21) Application number: 21166611.0
(22) Date of filing: 01.04.2021
(51) Int. Cl.: F16D 1/10

(54) **CODED PLUG-IN SHAFT COUPLING**
CODIERTE STECKBARE WELLENKUPPLUNG
ACCOUPLEMENT D'ARBRE ENFICHABLE CODÉ

(30) Priority: 16.02.2021 US 202163149937 P
(43) Date of publication of application: 17.08.2022
(73) Proprietor: Hengstler GmbH, 78554 Aldingen (DE)
(72) Inventor: Wöhrstein, Andreas, 78126 Königsfeld (DE); Linden, Martin, 78166 Donaueschingen (DE)
(74) Representative: Riebling, Peter

(56) References cited:
- EP-A1- 2 711 497
- US-A- 1 378 091
- US-A- 1 887 081
- US-A1- 2019 174 909

## Description

The present invention relates to a coded plug-in shaft coupling according to the preamble of claim 1.

Embodiments of the present invention are particularly relevant in the field of servo motors. These types of motors are operated together with an encoder, whereby the encoder detects the current angular position of the motor shaft and feeds this information to a control loop which in turn controls the current supply to the motor windings of the servo motor. For this purpose, the encoder shaft is connected to the motor shaft via a shaft coupling. A measuring scale is mounted on the encoder shaft to determine the angular position of the motor shaft. An important task of the encoder is to determine the commutation between the rotor and stator so that the motor windings are properly energized. The commutation angle is determined once after the encoder has been mounted on the motor with the aid of the encoder and stored permanently.

The information of the commutation angle is lost when the encoder is disassembled and reassembled. This is the case, for example, if a defective motor or encoder has to be replaced. In this case, the commutation has to be set again, which can be very time-consuming depending on the application.

The utility model DE 20 2008 010 765 U1 proposes a design of a plug-in coupling according to the preamble of claim 1. However, this coupling allows for joining the two shafts in different angular positions. In servo motor applications the commutation has to be set again after a replacement the motor or the encoder.

EP 2 189 675 B1 also describes a design of a plug-in coupling according to the preamble of claim 1. However, again the two shafts can be joined in different angular positions. A further disadvantage of this solution is the joining of the couplings which requires significant attention and care, since the design distinction of the rotation angle position is not very pronounced and does not include elements for simplified joining.

EP 2 711 497 A1 discloses a coded plug-in shaft coupling with the features of the preamble of claim 1.

US 2019/174909 A1 and US 1 378 091 A also disclose coded plug-in shaft couplings according to the preamble of claim 1.

US 1 887 081 A discloses a coded plug-in shaft coupling according to the preamble of claim 1.

It is the object of invention to provide a plug-in shaft coupling which solves the above mentioned problems and which provides an improved torsional stiffness and torque transmission capability as well as simple assembly.

The object of invention is achieved by providing a plug-in shaft coupling according to claim 1. Preferred embodiments and features of the invention are addressed in the subclaims.

The present invention provides a coded plug-in shaft coupling, comprising
a first coupling element, designed to be fixedly arranged at an end of a first shaft,
a second coupling element, designed to be fixedly arranged at an end of a second shaft,
an intermediate element for a mechanical and torsionally-rigid connection of the first and second coupling elements, the intermediate element compensates for an axial, radial and angular misalignment between the two shafts,
wherein the first and second coupling elements and the intermediate element are formed in such a way that the coupling elements can be connected in only one predefined angular position.

It is an advantageous feature of the present invention that it provides an angle coding that is by means of the plug-in shaft coupling the motor shaft and the encoder shaft can only be joined to each other in a predefined angular position. This allows for an easy replacement of the motor or the encoder without losing the correlation between the angular position of the encoder and the angular position of the motor.

Angle coding is provided by coding means in form of at least one coding recess arranged at each of the first and the second coupling elements and at least one coding extension arranged at each side of the intermediate element matching the coding recess of each of the coupling element. Preferably there are two coding recesses and two coding extensions for balance reasons. The two coding recesses are different in shape and in their positions at the coupling element and match the shape and positions of the two coding extensions at the intermediate element.

The intermediate element and the two coupling elements comprise coupling means. The intermediate element has a plurality of connecting claws at each side extending parallel to the axis of rotation. The connecting claws are formed to match and engage a plurality of coupling recesses provided at each of the coupling elements.

A further advantage of the present invention is the relatively simple assembly, since the intermediate element and the two coupling elements preferably have means for an easier connection, preferably in form of insertion slopes at the coupling means. The shaft coupling system is backlash-free in the joined state.

Preferably, each of the coupling elements and the intermedia element is balanced in the direction of rotation. Particular care was taken to ensure that the design features for angle encoding are well balanced along the axis of rotation.

Preferably, the intermediate element can be provided with a reinforced outer ring, which increases torsional stiffness and improves torque transmission.

In another embodiment of the invention, it may be provided that the means for encoding the angular position are formed by the connecting claws and coupling recesses themselves, in that at least one connecting claw and coupling recess have a different shape than the other connecting claws and coupling recesses and in this way only one position for the coupling between the coupling elements and the intermedia element is possible.

Generally, the coded plug-in shaft coupling according to the invention is provided for use together with a rotary encoder, in particular for use together with a rotary encoder mounted in an assembly which is part of a servo motor. The coupling is particularly suited for field replaceability of the motor or the encoder of the servo motor assembly without losing the correlation between the angular position of the encoder and the angular position of the motor.

An embodiment of the invention, from which further inventive features result, is shown in the accompanying drawings.
- Fig. 1: shows a perspective view of the three-element shaft coupling with a first embodiment of the intermediate element.
- Fig. 2: shows a perspective view of the first coupling element.
- Fig. 3: shows a perspective view of the second coupling element.
- Fig. 4: shows a perspective view of the first embodiment of the intermediate element.
- Fig. 5: shows a perspective view of the three-element shaft coupling with a second embodiment of the intermediate element.
- Fig. 6: shows a perspective view of the shaft coupling with the coupling elements joined with the intermediate element.

Embodiments of the present invention relate to a new type of plug-in and coded shaft coupling for connecting two end shafts mounted rotatably on bearings.

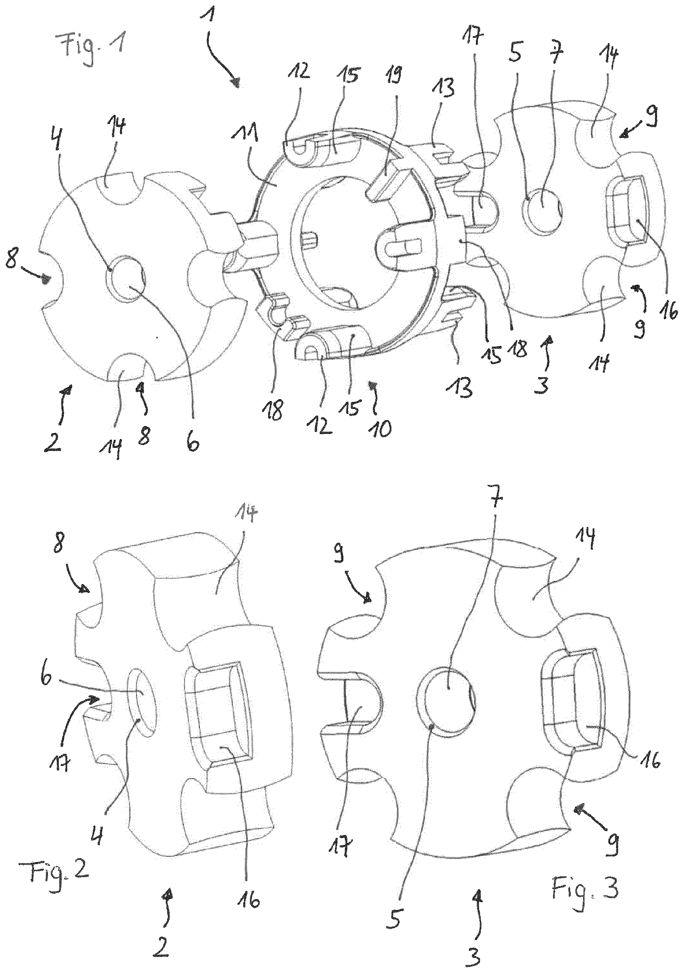

As best seen in Figures 1 to 4, the shaft coupling 1 according to the present invention consists of a first coupling element 2 and a second coupling element 3 which are to be coupled together by means of an intermediate element 10.

The first coupling element 2 is to be fixedly connected to an end of a first shaft (not shown) by means of its hub 4 and by way of fitting surfaces 6, and the second coupling element 3 is to be fixedly connected to an end of a second shaft (not shown) by means of its hub 5 and by way of fitting surfaces 7. The first and second shafts are generally arranged in alignment with one another and connected to the hubs 4, 5 of the coupling elements 2, 3 for example by press-fit, connection screws, adhesive joint or other known connection methods.

In a preferred embodiment of invention, both coupling elements 2, 3 are designed in the shape of a ring disc and preferably have a plurality of semicircular coupling recesses 8, 9 at a radial distance from the rotational axis, preferably in the region of the outer peripheral surface. The semicircular coupling recesses 8, 9 can preferably be arranged at equal angular intervals on the outer circumferential surface of the coupling elements 2, 3.

The intermediate element 10 is arranged between the first and second coupling elements 2 , 3 and connects the coupling elements 2, 3 to one another in a rotationally fixed manner.

The intermediate element 10 particularly consists of a ring-shaped or ring-disk shaped rotational body 11 extending in a radial plane to the axis of rotation of the intermediate element 8.

A plurality of connecting claws 12, 13 are disposed on both sides of the intermediate element 10 and arranged at a distance from the rotational axis and adjacent to the outer circumferential surface. The connecting claws 12, 13 extending from both sides of the intermediate element 10 at a predetermined distance from the axis of rotation and parallel thereto. The connecting claws 12, 13 extending in opposite directions to each other and are arranged offset at a predetermined angle to one another on the periphery of the rotary body 11 of the intermediate element 10.

The connecting claws 12, 13 preferably have a semi-cylindrical shape which is formed to match the semicircular coupling recesses 8, 9 of the coupling elements 2, 3. When the first coupling element 2 and the intermediate element 10 are plugged together, the connecting claws 12 of the intermediate element 10 positively engage in the coupling recesses 8 of the first coupling element 2. When the second coupling element 3 and the intermediate element 10 are plugged together, the connecting claws 13 of the intermediate element 10 positively engage in the coupling recesses 9 of the second coupling element 3.

The connecting claws 12, 13 have force-transmitting surfaces 15 which preferably have a half-cylindrical or a curved shape. The coupling recesses 8, 9 have force-transmitting surfaces 14 which are of bulbous or curved design. The force-transmitting surfaces 14, 15 ensure an advantageously angularly movable positive-locking connection between the connecting claws 12 ,13 of the intermediate element 10 and the coupling recesses 8, 9 of the coupling elements 2, 3.

Preferably, the coupling recesses 8, 9 of the coupling elements 2, 3 and / or the connecting claws 12, 13 of the intermediate element 10 have beveled edges that form insertion slopes for easier plugging together the coupling elements 2, 3 and the intermediate element 10.

For correct positional connection in a defined angular position, the coupling elements 2, 3 each have two coding recesses 16, 17 in addition to the coupling recesses 8. The coding recesses 16, 17 are located at a distance from each other and are differently shaped and are arranged at different positions on the coupling elements 2, 3.

The intermediate element 10 has two coding extensions 18, 19 on each side, which also have different shapes and positions and match the shape and positions of the coding recesses 16, 17 of the coupling elements 2, 3. A first coding extension 18 of the intermediate element 10 in formed to engage a first coding recess 16 of the coupling elements 2, 3, and a second coding extension 19 of the intermediate element 10 is formed to engage a second coding recess 17 of the coupling elements 2, 3.

Preferably, no forces act on the coding recesses 16, 17 and coding extensions 18, 19, as these are transmitted by the connecting claws 12, 13 and associated coupling recesses 8, 9 for torque transmission.

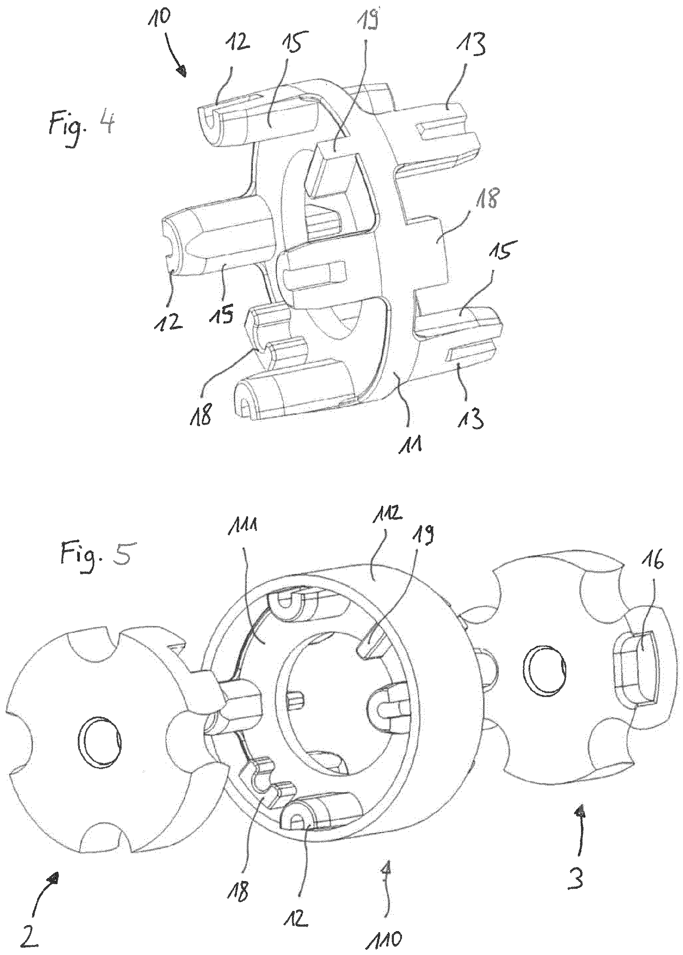

As depicted in Fig. 5, in a preferred embodiment of the invention, the intermediate element 110 can be provided with a reinforced outer ring 112, which surrounds the rotational body 111, increases torsional stiffness and improves torque transmission between the intermediate element 110 and the coupling elements 2, 3.

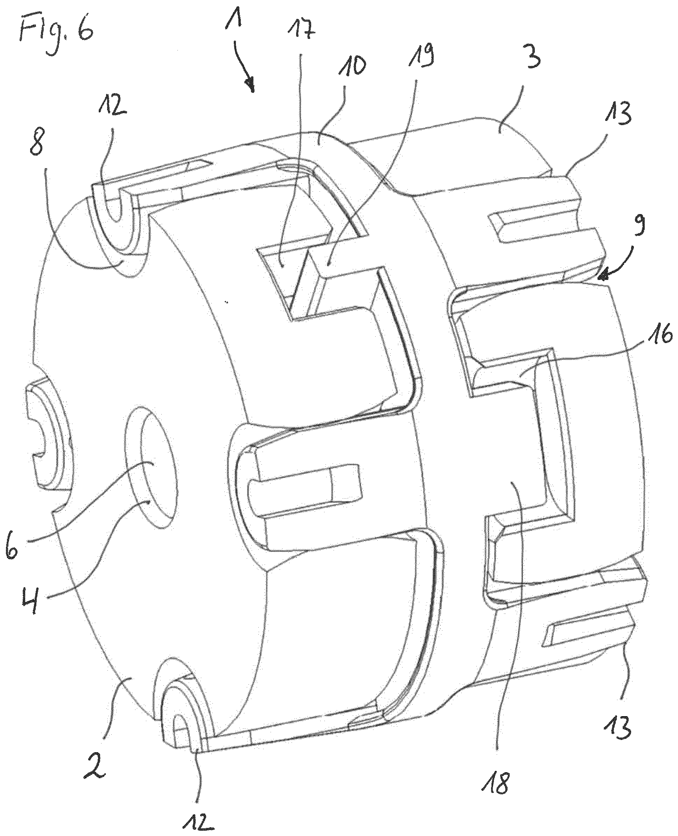

Fig. 6 shows the shaft coupling with the coupling elements 2, 3 joined with the intermediate element 10. The connecting claws 12, 13 of the intermediate element 10 engage the coupling recesses 8, 9 of the coupling elements 2, 3. Each coding extension 18, 19 engages its corresponding coding recess 16, 17. Due to the different shapes of the coding recesses 16, 17 of the coupling elements 2, 3 and the corresponding coding extensions 18, 19 at the intermediate element 10, both coupling elements 2, 3 can only be coupled in one defined angular position with the intermediate element 10.

### List of reference numerals

- 1: Shaft coupling
- 2: first coupling element
- 3: second coupling element
- 4: hub
- 5: hub
- 6: fitting surface
- 7: fitting surface
- 8: coupling recess
- 9: coupling recess
- 10: intermediate element
- 11: rotational body
- 12: connecting claw
- 13: connecting claw
- 14: force-transmitting surface
- 15: force-transmitting surface
- 16: coding recess
- 17: coding recess
- 18: coding extension
- 19: coding extension
- 110: intermediate element
- 111: Rotational body
- 112: outer ring

## Claims

1. Coded plug-in shaft coupling, comprising:
a first coupling element (2),
a second coupling element (3),
an intermediate element (10) compensating for an axial, radial and angular misalignment between two shafts,
coupling means for a mechanical and torsionally-rigid connection of the intermediate element (10) and the first and second coupling elements (2, 3), , wherein the coupling means comprises a plurality of coupling recesses (8, 9) provided at the first and second coupling elements (2, 3), the recesses (8, 9) are located at a radial distance from a rotational axis of the coupling elements (8, 9),
wherein the coupling means further comprises a plurality of connecting claws (12, 13) provided at the intermediate element (10, 110), the connecting claws (12, 13) are extending from both sides of the intermediate element (10) parallel to and at a radial distance from the axis of rotation and are formed to match and engage the plurality of coupling recesses (8, 9) provided at each of the coupling elements (2, 3),
**characterized in that** the first and second coupling elements (2, 3) and the intermediate element (10, 110) are formed in such a way that the first coupling elements (2, 3) are to be connected in only one predefined angular position, wherein the first and the second coupling elements (2, 3) each have at least two coding recesses (16, 17) for angular positioning which are located at a distance from each other and are differently shaped and are arranged at different positions on the coupling elements 2, 3, and the intermediate element (10, 110) has at least two coding extensions (18, 19) on each side for angular positioning, which matches the shapes and positions of the coding recesses (16, 17) of the coupling elements (2, 3).

2. Coded plug-in shaft coupling according to claim 1, **characterized in that** the first and the second coupling elements (2, 3) each have at least two coding recesses (16, 17) which have different shape and positions, and that the intermediate element (10, 110) has at least two coding extensions (18, 19) on each side, which have different shapes and positions and match the shapes and positions of the at least two coding recesses (16, 17) of the coupling elements (2, 3) for angular positioning.

3. Coded plug-in shaft coupling according to claim 1, **characterized in that** the coupling recesses (8, 9) of the coupling elements (2, 3) having a semicircular or curved form.

4. Coded plug-in shaft coupling according to claim 1, **characterized in that** the connecting claws (12, 13) at both sides of the intermediate element (10, 110) extending in opposite directions to each other and are arranged offset at a predetermined angle to one another on the periphery of a rotary body (11, 111) of the intermediate element (10, 110).

5. Coded plug-in shaft coupling according to claim 1, **characterized in that** the connecting claws (12, 13) of the intermediate element (10, 110) have force-transmitting surfaces (14) having a semi-cylindrical or curved shape.

6. Coded plug-in shaft coupling according to any of claims 1 to 5, **characterized in that** the coupling recesses (8, 9) of the coupling elements (2, 3) and / or the connecting claws (12, 13) of the intermediate element (10, 110) have beveled edges that form insertion slopes.

7. Coded plug-in shaft coupling according to any of claims 1 to 6, **characterized in that** hat the intermediate element (110) comprises a reinforced outer ring (112), which surrounds the rotational body (111).

8. Coded plug-in shaft coupling according to any of claims 1 to 7, **characterized in that** the coupling is designed for use together with a rotary encoder.

9. Coded plug-in shaft coupling according to any of claims 1 to 8, **characterized in that** the coupling is designed for use together with a rotary encoder mounted in an assembly which is part of a servo motor.

10. Coded plug-in shaft coupling according to any of claims 1 to 9, **characterized in that** the coupling is designed for use together with a rotary encoder mounted in an assembly which is part of a servo motor and which is suited for field replaceability.

11. Coded plug-in shaft coupling according to any of claims 9 or 10, **characterized in that** the coupling is designed for a replacement of the motor or the encoder of the servo motor assembly without losing the correlation between the angular position of the encoder and the angular position of the motor.

12. A servo motor operated together with a rotary encoder, wherein the rotary encoder comprises a shaft that is connected to a shaft of the servo motor via the coded plug-in shaft coupling (1) according to any of claims 1 to 11, whereby the rotary encoder is designed to detect the current angular position of the motor shaft and to feeding this information to a control loop which in turn controls a current supply to motor windings of the servo motor, wherein the coded plug-in shaft coupling (1) provides an angle coding that is by means of the plug-in shaft coupling (1) the motor shaft and the encoder shaft can only be joined to each other in a predefined angular position thus allowing for an easy replacement of the motor or the encoder without losing the correlation between the angular position of the encoder and the angular position of the motor.

## Patentansprüche

1. Codierte Steckwellenkupplung, umfassend:
ein erstes Kopplungselement (2),
ein zweites Kopplungselement (3),
ein Zwischenelement (10), das einen axialen, radialen und Winkel-Fluchtungsfehler zwischen zwei Wellen ausgleicht,
ein Kopplungsmittel für eine mechanische und torsionssteife Verbindung des Zwischenelements (10) und des ersten und des zweiten Kopplungselements (2, 3), wobei das Kopplungsmittel eine Mehrzahl von Kopplungsausnehmungen (8, 9) umfasst, die an dem ersten und dem zweiten Kopplungselement (2, 3) vorgesehen sind, wobei die Ausnehmungen (8, 9) in einem radialen Abstand von einer Drehachse der Kopplungselemente (8, 9) angeordnet sind,
wobei das Kopplungsmittel ferner eine Mehrzahl von Verbindungsklauen (12, 13) umfasst, die an dem Zwischenelement (10, 110) vorgesehen sind, wobei sich die Verbindungsklauen (12, 13) von beiden Seiten des Zwischenelements (10) aus parallel zu und in einem radialen Abstand von der Drehachse erstrecken und so ausgebildet sind, dass sie mit der Mehrzahl der Kopplungsausnehmungen (8, 9), die jeweils an den Kopplungselementen (2, 3) vorgesehen sind, zusammenpassen und mit ihnen in Eingriff kommen,
**dadurch gekennzeichnet, dass** das erste und das zweite Kopplungselement (2, 3) und das Zwischenelement (10, 110) in einer solchen Weise ausgebildet sind, dass die ersten Kopplungselemente (2, 3) nur in einer vorbestimmten Winkelposition zu verbinden sind, wobei das erste und das zweite Kopplungselement (2, 3) zur Winkelpositionierung jeweils mindestens zwei Codierungsausnehmungen (16, 17) aufweisen, die in einem Abstand voneinander angeordnet sind und unterschiedlich geformt sind und an unterschiedlichen Positionen auf den Kopplungselementen (2, 3) angeordnet sind, und das Zwischenelement (10, 110) zur Winkelpositionierung mindestens zwei Codierungsvorsprünge (18, 19) auf jeder Seite hat, die in Form und Position mit den Codierungsausnehmungen (16, 17) der Kopplungselemente (2, 3) zusammenpassen.

2. Codierte Steckwellenkupplung gemäß Anspruch 1, **dadurch gekennzeichnet, dass** das erste und das zweite Kopplungselement (2, 3) jeweils mindestens zwei Codierungsausnehmungen (16, 17) aufweisen, die unterschiedliche Formen und Positionen haben, und dass das Zwischenelement (10, 110) auf jeder Seite mindestens zwei Codierungsfortsätze (18, 19) hat, die unterschiedliche Formen und Positionen haben und zur Winkelpositionierung mit den Formen und Positionen der mindestens zwei Codierungsausnehmungen (16, 17) der Kopplungselemente (2, 3) zusammenpassen.

3. Codierte Steckwellenkupplung gemäß Anspruch 1, **dadurch gekennzeichnet, dass** die Kopplungsausnehmungen (8, 9) der Kopplungselemente (2, 3) eine halbkreisförmige oder gekrümmte Form haben.

4. Codierte Steckwellenkupplung gemäß Anspruch 1, **dadurch gekennzeichnet, dass** sich die Verbindungsklauen (12, 13) an beiden Seiten des Zwischenelements (10, 110) in entgegengesetzten Richtungen zueinander erstrecken und auf dem Umfang eines Rotationskörpers (11, 111) des Zwischenelements (10, 110) in einem bestimmten Winkel zueinander versetzt angeordnet sind.

5. Codierte Steckwellenkupplung gemäß Anspruch 1, **dadurch gekennzeichnet, dass** die Verbindungsklauen (12, 13) des Zwischenelements (10, 110) kraftübertragende Oberflächen (14) haben, die eine halbkreisförmige oder gekrümmte Form haben.

6. Codierte Steckwellenkupplung gemäß einem der Ansprüche 1 bis 5, **dadurch gekennzeichnet, dass** die Kopplungsausnehmungen (8, 9) der Kopplungselemente (2, 3) und/oder der Verbindungsklauen (12, 13) des Zwischenelements (10, 110) angeschrägte Kanten haben, die Einführschrägen ausbilden.

7. Codierte Steckwellenkupplung gemäß einem der Ansprüche 1 bis 6, **dadurch gekennzeichnet, dass** das Zwischenelement (110) einen verstärkten Außenring (112) umfasst, der den Rotationskörper (111) umgibt.

8. Codierte Steckwellenkupplung gemäß einem der Ansprüche 1 bis 7, **dadurch gekennzeichnet, dass** die Kupplung dazu konstruiert ist, zusammen mit einem Drehgeber verwendet zu werden.

9. Codierte Steckwellenkupplung gemäß einem der Ansprüche 1 bis 8, **dadurch gekennzeichnet, dass** die Kupplung dazu konstruiert ist, zusammen mit einem Drehgeber verwendet zu werden, der in einer Anordnung montiert ist, die Teil eines Stellmotors ist.

10. Codierte Steckwellenkupplung gemäß einem der Ansprüche 1 bis 9, **dadurch gekennzeichnet, dass** die Kupplung dazu konstruiert ist, zusammen mit einem Drehgeber verwendet zu werden, der in einer Anordnung montiert ist, die Teil eines Stellmotors ist und die zur Vor-Ort-Austauschbarkeit geeignet ist.

11. Codierte Steckwellenkupplung gemäß einem der Ansprüche 9 oder 10, **dadurch gekennzeichnet, dass** die Kupplung für einen Austausch des Motors oder des Gebers der Stellmotoranordnung konstruiert ist, ohne dass dabei die Korrelation zwischen der Winkelposition des Gebers und der Winkelposition des Motors verloren geht.

12. Stellmotor, der zusammen mit einem Drehgeber betrieben wird, wobei der Drehgeber ein Welle umfasst, die über die codierte Steckwellenkupplung (1) gemäß einem der Ansprüche 1 bis 11 mit einer Welle des Stellmotors verbunden ist, wobei der Drehgeber dazu konstruiert ist, die aktuelle Winkelposition der Motorwelle zu erfassen und diese Information in eine Regelschleife einzuspeisen, die ihrerseits eine Stromversorgung der Motorwicklungen des Stellmotors regelt, wobei die codierte Steckwellenkupplung (1) eine Winkelcodierung bereitstellt, was bedeutet, dass mittels der Steckwellenkupplung (1) die Motorwelle und die Geberwelle nur in einer vordefinierten Winkelposition zusammengefügt werden können, wodurch ein leichter Austausch des Motors oder des Gebers ermöglicht wird, ohne dass dabei die Korrelation zwischen der Winkelposition des Gebers und der Winkelposition des Motors verloren geht.

## Revendications

1. Accouplement d'arbre enfichable codé, comprenant :
un premier élément d'accouplement (2),
un deuxième élément d'accouplement (3),
un élément intermédiaire (10) compensant un désalignement axial, radial et angulaire entre deux arbres,
un moyen d'accouplement pour une liaison mécanique et rigide en torsion de l'élément intermédiaire (10) et des premier et deuxième éléments d'accouplement (2, 3), dans lequel le moyen d'accouplement comprend une pluralité d'évidements (8, 9) d'accouplement au niveau des premier et deuxième éléments d'accouplement (2, 3), les évidements (8, 9) sont situés à une distance radiale d'un axe de rotation des éléments d'accouplement (8, 9),
dans lequel le moyen d'accouplement comprend en outre une pluralité de griffes de liaison (12, 13) au niveau de l'élément intermédiaire (10, 110), les griffes de liaison (12, 13) s'étendent des deux côtés de l'élément intermédiaire (10) parallèlement à et à une distance radiale de l'axe de rotation et sont formées pour correspondre à et venir en prise avec la pluralité d'évidements (8, 9) d'accouplement au niveau de chacun des éléments d'accouplement (2, 3),
**caractérisé en ce que** les premier et deuxième éléments d'accouplement (2, 3) et l'élément intermédiaire (10, 110) sont formés de telle sorte que les premiers éléments d'accouplement (2, 3) doivent être reliés dans seulement une position angulaire prédéfinie, dans lequel le premier et le deuxième élément d'accouplement (2, 3) ont chacun au moins deux évidements de codage (16, 17) pour un positionnement angulaire qui sont situés à une distance l'un de l'autre et sont de forme différente et sont agencés à des positions différentes sur les éléments d'accouplement (2, 3), et l'élément intermédiaire (10, 110) a au moins deux extensions de codage (18, 19) sur chaque côté pour un positionnement angulaire, qui correspondent aux formes et positions des évidements de codage (16, 17) des éléments d'accouplement (2, 3).

2. Accouplement d'arbre enfichable codé selon la revendication 1, **caractérisé en ce que** le premier et le deuxième élément d'accouplement (2, 3) ont chacun au moins deux évidements de codage (16, 17) qui ont une forme et des positions différentes, et **en ce que** l'élément intermédiaire (10, 110) a au moins deux extensions de codage (18, 19) sur chaque côté, qui ont des formes et des positions différentes et correspondent aux formes et positions des au moins deux évidements de codage (16, 17) des éléments d'accouplement (2, 3) pour un positionnement angulaire.

3. Accouplement d'arbre enfichable codé selon la revendication 1, **caractérisé en ce que** les évidements (8, 9) d'accouplement des éléments d'accouplement (2, 3) ont une forme semi-circulaire ou incurvée.

4. Accouplement d'arbre enfichable codé selon la revendication 1, **caractérisé en ce que** les griffes de liaison (12, 13) des deux côtés de l'élément intermédiaire (10, 110) s'étendent dans des directions opposées l'une à l'autre et sont agencées décalées à un angle prédéterminé l'une par rapport à l'autre sur la périphérie d'un corps rotatif (11, 111) de l'élément intermédiaire (10, 110).

5. Accouplement d'arbre enfichable codé selon la revendication 1, **caractérisé en ce que** les griffes de liaison (12, 13) de l'élément intermédiaire (10, 110) ont des surfaces de transmission de force (14) ayant une forme semi-cylindrique ou incurvée.

6. Accouplement d'arbre enfichable codé selon l'une des revendications 1 à 5, **caractérisé en ce que** les évidements (8, 9) d'accouplement des éléments d'accouplement (2, 3) et/ou les griffes de liaison (12, 13) de l'élément intermédiaire (10, 110) ont des bords biseautés qui forment des pentes d'insertion.

7. Accouplement d'arbre enfichable codé selon l'une des revendications 1 à 6, **caractérisé en ce que** l'élément intermédiaire (110) comprend un anneau extérieur renforcé (112), qui entoure le corps rotatif (111).

8. Accouplement d'arbre enfichable codé selon l'une des revendications 1 à 7, **caractérisé en ce que** l'accouplement est conçu pour être utilisé conjointement avec un codeur rotatif.

9. Accouplement d'arbre enfichable codé selon l'une des revendications 1 à 8, **caractérisé en ce que** l'accouplement est conçu pour être utilisé conjointement avec un codeur rotatif monté dans un ensemble qui fait partie d'un servomoteur.

10. Accouplement d'arbre enfichable codé selon l'une des revendications 1 à 9, **caractérisé en ce que** l'accouplement est conçu pour être utilisé conjointement avec un codeur rotatif monté dans un ensemble qui fait partie d'un servomoteur et qui est approprié pour pouvoir être remplacé sur le terrain.

11. Accouplement d'arbre enfichable codé selon l'une des revendications 9 ou 10, **caractérisé en ce que** l'accouplement est conçu pour un remplacement du moteur ou du codeur de l'ensemble servomoteur sans perdre la corrélation entre la position angulaire du codeur et la position angulaire du moteur.

12. Servomoteur fonctionnant conjointement avec un codeur rotatif, dans lequel le codeur rotatif comprend un arbre qui est relié à un arbre du servomoteur via l'accouplement d'arbre enfichable (1) codé selon l'une des revendications 1 à 11, moyennant quoi le codeur rotatif est conçu pour détecter la position angulaire courante de l'arbre de moteur et pour délivrer cette information à une boucle de commande qui commande à son tour une alimentation en courant d'enroulements de moteur du servomoteur, dans lequel l'accouplement d'arbre enfichable (1) codé fournit un codage d'angle, c'est-à-dire que, au moyen de l'accouplement d'arbre enfichable (1), l'arbre de moteur et l'arbre de codeur peuvent seulement être assemblés l'un avec l'autre dans une position angulaire prédéfinie, permettant ainsi un remplacement facile du moteur ou du codeur sans perdre la corrélation entre la position angulaire du codeur et la position angulaire du moteur.
